# EUROPEAN PATENT APPLICATION

(11) **EP 4 432 213 A1**
(43) Date of publication of application: **18.09.2024**
(21) Application number: 24159135.3
(22) Date of filing: 22.02.2024
(51) Int. Cl.: G06T 3/12, G06T 5/80

(54) **INFORMATION PROCESSING APPARATUS, INFORMATION PROCESSING SYSTEM, INFORMATION PROCESSING METHOD, AND CARRIER MEANS**

(30) Priority: 16.03.2023 JP 2023041588
(71) Applicant: Ricoh Company, Ltd., Tokyo 143-8555 (JP)
(72) Inventor: SUITOH, Hiroshi, Tokyo, 143-8555 (JP); MAGARISAWA, Manabu, Tokyo, 143-8555 (JP)
(74) Representative: SSM Sandmair

(57) **Abstract**

An information processing apparatus (120) includes a correction unit (210, 630) to perform correction on a wide-angle image to correct the wide-angle image. The correction involves rotation around a vertical direction as a rotation axis. The information processing apparatus (120) includes a conversion unit (210, 630) to convert the wide-angle image into a cube map format.

## Description

### BACKGROUND

### Technical Field

The present disclosure relates to an information processing apparatus, an information processing system, an information processing method, and a carrier means.

### Related Art

Imaging devices that capture a so-called spherical image are known. Such an imaging device captures a spherical image using multiple wide-angle lenses or multiple fisheye lenses, with multiple imaging elements. Such imaging devices are referred to as spherical imaging devices in the following description.

The spherical image captured by the spherical imaging device can be displayed as an image in various formats such as an equirectangular format, a perspective projection format, a fisheye format, a cube map format, and others. The cube map format is a representation of or resembling an unfolded cube.

For example, Japanese Patent No. 6704134 discloses a technique for displaying a spherical image as an image in cube map format. According to Japanese Patent No. 6704134, a spherical image can be generated by image processing that is easily performed by using, for example, deep learning, and the generated spherical image can be displayed.

An image in cube map format is displayed by projecting a spherical image captured by a spherical imaging device virtually surrounded by a cube having the faces (front face, back face, right face, left face, top face, and bottom face), onto the faces, so that each of the faces has an image. In case of a wide-angle image in cube map format, such as a spherical image in cube map format, the images on the faces have discontinuous changes in perspective at the boundaries between the faces. Due to this, such an image in cube map format often appears as an unnatural image when viewed as a single image.

For this reason, a technique for enhancing the visibility of the image in cube map format has been demanded.

### SUMMARY

According to an embodiment or the present disclosure, an information processing apparatus includes a correction unit to perform correction on a wide-angle image to correct the wide-angle image. The correction involves rotation around a vertical direction as a rotation axis. The information processing apparatus includes a conversion unit to convert the wide-angle image into a cube map format.

According to an embodiment of the present disclosure, an information processing system includes the above-described information processing apparatus and an image capturing apparatus configured to capture the wide-angle image.

According to an embodiment of the present disclosure, an information processing method includes performing correction involving rotation around a vertical direction as a rotation axis on a wide-angle image to correct the wide-angle image, and converting the wide-angle image into a cube map format.

According to an embodiment of the present disclosure, a carrier means carries computer readable codes for controlling a computer to carry out the above-described method.

According to one aspect of the present disclosure, an information processing apparatus, an information processing system, a method, and a program can enhance visibility in an image in cube map format.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a hardware configuration of a system according to some embodiments of the present disclosure;
FIG. 2 is a block diagram illustrating a hardware configuration of an information processing apparatus according to some embodiments of the present disclosure;
FIG. 3 is a cross-sectional view of a spherical imaging device included in a system according to some embodiments of the present disclosure;
FIGS. 4A and 4B are diagrams each illustrating a definition of an orientation of a spherical imaging device according to some embodiments of the present disclosure;
FIG. 5A is a diagram illustrating a spherical image on which zenith correction is not performed, according to some embodiments of the present disclosure;
FIG. 5B is a diagram illustrating a spherical image on which zenith correction has been performed according to some embodiments of the present disclosure;
FIG. 6 is a block diagram illustrating a software configuration of an information processing apparatus according to some embodiments of the present disclosure;
FIG. 7 is a flowchart of a process for displaying a spherical image in cube map format according to some embodiments of the present disclosure;
FIG. 8 is a flowchart of alignment calculation according to some embodiments of the present disclosure;
FIG. 9 is a flowchart of a process for converting into cube map format according to some embodiments of the present disclosure;
FIG. 10A is a diagram illustrating a spherical image on which zenith correction is not performed, according to some embodiments of the present disclosure;
FIG. 10B is a diagram illustrating a spherical image on which zenith correction has been performed, according to some embodiments of the present disclosure;
FIGS. 11A and 11B are diagrams each illustrating a spherical image converted into cube map format according to some embodiments of the present disclosure;
FIGS. 12A and 12B are diagrams each illustrating an image from which a structure is estimated according to some embodiments of the present disclosure;
FIGS. 13A and 13B are diagrams each illustrating specifying a structure in an image in cube map format according to some embodiments of the present disclosure;
FIGS. 14A and 14B are diagrams each illustrating alignment correction according to some embodiments of the present disclosure;
FIG. 15 is a diagram illustrating a spherical image in cube map format that has been subjected to alignment correction according to some embodiments of the present disclosure;
FIGS. 16A and 16B are diagrams illustrating a correspondence relationship of coordinates between a spherical image in equirectangular format and coordinates of a spherical image in cube map format according to some embodiments of the present disclosure;
FIGS. 17A and 17B are diagrams each illustrating display of an annotation according to some embodiments of the present disclosure;
FIGS. 18A and 18B are diagrams each illustrating a spherical image in cube map format on which an icon is not appropriately displayed, according to some embodiments of the present disclosure;
FIGS. 19A and 19B are diagrams each illustrating a spherical image in cube map format on which an icon is appropriately positioned, according to some embodiments of the present disclosure;
FIGS. 20 is a diagram illustrating a user interface (UI) displaying a spherical image in cube map format according to some embodiments of the present disclosure; and
FIGS. 21 is a diagram illustrating a UI displaying a spherical image in cube map format according to some embodiments of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Some embodiments of the present disclosure are described below. However, the present disclosure is not limited to the embodiments described herein. In the drawings referred to below, the same or similar reference codes are used for the common or corresponding components, and redundant descriptions are omitted as appropriate.

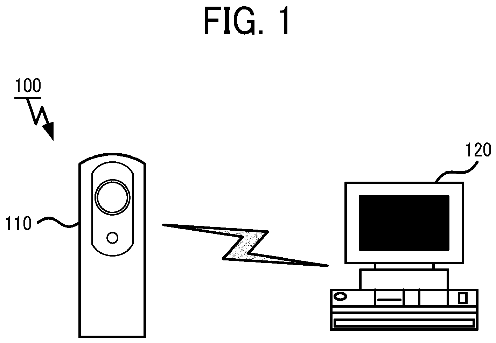

FIG. 1 is a schematic diagram illustrating a hardware configuration of a system 100 according to an embodiment of the present disclosure. In FIG. 1, the system 100 according to the present embodiment includes a spherical imaging device 110 and an information processing apparatus 120. The system 100 is referred to as an information processing system. The spherical imaging device 110 and the information processing apparatus 120 can exchange data with each other in a wired or wireless manner. For example, the spherical imaging device 110 can transmit an image captured by the spherical imaging device 110 to the information processing apparatus 120. Such data exchange between the spherical imaging device 110 and the information processing apparatus 120 is not limited to wired or wireless communication as described above, and may be performed by, for example, various recording media. Examples of wireless communication include communication by 3rd Generation (3G), 4th Generation (4G), 5th Generation (5G), WIRELESS FIDELITY (WI-FI), Worldwide Interoperability for Microwave Access (WiMAX), and Long Term Evolution (LTE).

The spherical imaging device 110 captures an image with a solid angle of 4π steradians centered around the spherical imaging device 110 (referred to as a "spherical image" in the following description) by using, for example, multiple wide-angle lenses or multiple fisheye lenses. The configuration of the spherical imaging device 110 is described in detail later. The spherical imaging device 110 obtains a captured image by capturing an image in an imaging site such as an outdoor space, an interior space of a structure of, for example, a real estate property or a building, or a structure in, for example, construction or civil engineering (for example, inside of a tunnel).

The information processing apparatus 120 is, for example, a terminal apparatus such as a personal computer or a smartphone. The information processing apparatus 120 can perform various kinds of image processing on spherical images captured by the spherical imaging device 110 and display the spherical images.

Examples of the image processing performed by the information processing apparatus 120 include zenith correction for spherical images, correction of brightness and color tone in images, blurring of images, and addition of text to images.

The information processing apparatus 120 may be implemented by a single server computer or multiple server computers. The information processing apparatus 120 may be a server computer residing in a cloud environment or a server computer residing in an on-premises environment. When the information processing apparatus 120 is implemented as a server computer, a terminal apparatus such as a personal computer or a smartphone used by a user can exchange data with the information processing apparatus 120 that is a server computer in a wired or wireless manner. This implements an embodiment of the present disclosure as will be described later in detail.

The information processing apparatus 120 may include a generation unit that obtains captured images captured by the spherical imaging device 110 and generates a tour image using the obtained captured images for providing a virtual tour to users. The virtual tour is content for users to view an image as if the users were physically present at the location to view the imaging site, such as an interior space of a structure of, for example, a real estate property or a building. The tour image is generated by using multiple captured images that are captured by the spherical imaging device 110. The tour image is an image for being viewed by a user and that allows the user to virtually move in the site corresponding to the captured image according to an operation of the user. Such virtual tours can feasibly be implemented for exterior spaces of structures, such as tourist spots and theme parks, not limited to interior spaces of structures of real estate properties or buildings.

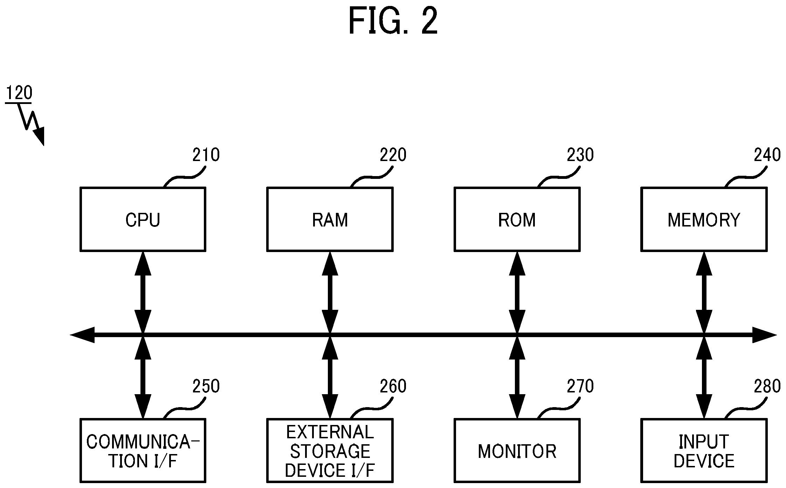

A hardware configuration of the information processing apparatus 120 is described below. FIG. 2 is a block diagram illustrating a hardware configuration of the information processing apparatus 120 according to the present embodiment. The information processing apparatus 120 includes a central processing unit (CPU) 210, a random-access memory (RAM) 220, a read-only memory (ROM) 230, a memory 240, a communication interface (I/F) 250, an external storage device I/F 260, a monitor 270, and an input device 280 that are hardware components connected to each other via a bus.

The CPU 210 executes a program for controlling the operation of the information processing apparatus 120 to perform predetermined processing. The RAM 220 is a volatile storage device that provides a work area for the CPU 210 executing programs. The RAM 220 is used to store and load programs and data. The ROM 230 is a non-volatile storage device for storing, for example, programs or firmware to be executed by the CPU 210.

The memory 240 is a readable and writable non-volatile storage device that stores, for example, an operating system (OS), various applications, setting information, or various data that causes (cause) the information processing apparatus 120 to function. Examples of the memory 240 include a hard disk drive (HDD) and a solid-state drive (SSD).

The communication I/F 250 connects the information processing apparatus 120 and a network and enables the information processing apparatus 120 to communicate with another apparatus via the network. Communication via the network may be either wired or wireless, and various data can be transmitted and received using a predetermined communication protocol such as a transmission control protocol/internet protocol (TCP/IP). The communication I/F 250 may directly communicate with another apparatus without using a network. For example, the communication I/F 250 may directly communicate with the spherical imaging device 110.

The external storage device I/F 260 is an interface for reading and writing data from and to various recording media. Examples of the recording medium include a compact disc-read-only memory (CD-ROM), a digital versatile disc (DVD), and a secure digital (SD) card. Examples of the external storage device I/F 260 include a CD drive, a DVD drive, and an SD card slot each of which enables reading from and writing to the above-described recording media. The recording media and the external storage device I / F 260 are not limited to those described above.

The monitor 270 is a device that displays, for example, various data, an image, or a status of the information processing apparatus 120 to the user and is implemented by, for example, a liquid crystal display (LCD). The input device 280 allows the user to operate the information processing apparatus 120 and is implemented by, for example, a keyboard or a mouse. The monitor 270 and the input device 280 may be devices separated from each other or may be integrated as a single device such as a touch panel display having both functions of the monitor 270 and the input device 280.

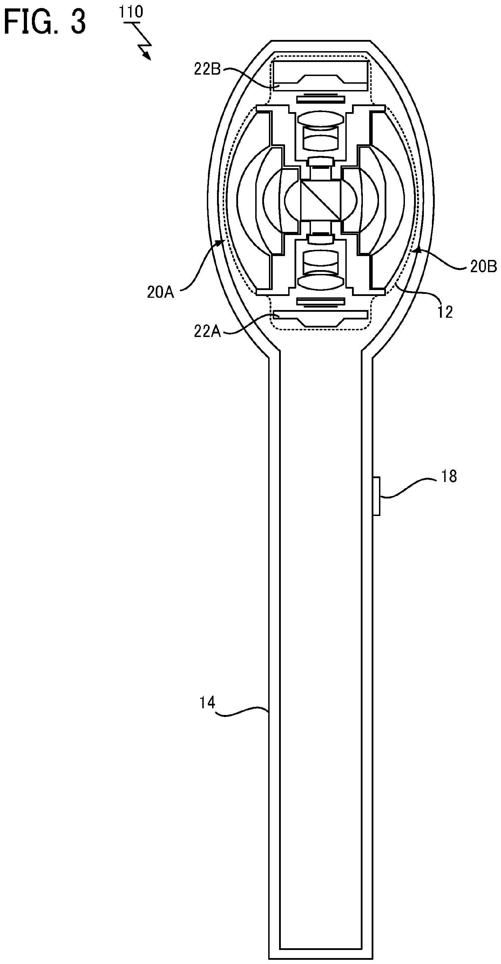

FIG. 3 is a cross-sectional view of the spherical imaging device 110 included in the system 100 according to the present embodiment. The spherical imaging device 110 illustrated in FIG. 3 includes an imaging body 12, a casing 14 that holds the imaging body 12 and other components such as a control board and a battery, and an imaging button 18 provided on the casing 14. The spherical imaging device 110 further includes various sensors such as an acceleration sensor and a ground magnetic sensor and devices such as a communication I/F. One or more of the above-described devices allow the spherical imaging device 110 to obtain orientation data or transfer an image to the information processing apparatus 120. A detailed description of the above-described various devices is omitted.

The imaging body 12 illustrated in FIG. 3 includes two lens optical systems 20A and 20B and two image sensors 22A and 22B. The image sensors 22A and 22B are, for example, complementary metal oxide semiconductor (CMOS) sensors, or charge-coupled device (CCD) sensors. The image sensors 22A and 22B are arranged so that the imaging surfaces thereof are opposed to each other. Each of the lens optical systems 20A and 20B is configured as a fisheye lens consisting of, for example, seven lenses in six groups or fourteen lenses in ten groups. In the present embodiment illustrated in FIG. 3, the fisheye lens has a full angle of view of 180 degrees or more (=360 degrees/n, where n denotes the number of optical systems and n is 2), preferably has an angle of view of 190 degrees or more. In the description of the present embodiment, two fisheye lenses each having a full angle of view of 180 degrees or more are used. In some embodiments, three or more lens optical systems and imaging elements may be used as long as a predetermined angle of view is obtained as a whole.

In the description of the present embodiment, a fisheye lens is used. In some embodiments, as long as a predetermined angle of view is obtained as a whole, a wide-angle lens or super-wide-angle lens may be used as an alternative to the fisheye lens.

The relative positions of the optical elements (lenses, prisms, filters, and aperture stops) of the two lens optical systems 20A and 20B are defined with reference to the image sensors 22A and 22B. More specifically, positioning is made such that the optical axis of the optical elements of each of the lens optical systems 20A and 20B is positioned at the central part of the light-receiving area of corresponding one of the image sensors 22 orthogonally to the light-receiving area, and such that the light receiving area serves as the imaging plane of corresponding one of the fisheye lenses. In the description of the present embodiment, in order to reduce disparity, a bending optical system in which light collected by the two lens optical systems 20A and 20B is distributed to the two image sensors 22A and 22B by two 90-degree prisms is used. However, the present disclosure is not limited thereto. In some embodiments, a three-fold refracting structure is adopted in order to further reduce disparity. In some embodiments, a straight optical system is adopted in order to reduce cost.

In the present embodiment illustrated in FIG. 3, the lens optical systems 20A and 20B have the same specification and are combined facing opposite such that the optical axes thereof match with each other. The image sensors 22A and 22B convert the light distribution of the received light into an image signal, and sequentially output images to the image processing block of the control board. As described below in detail, the images captured by the image sensors 22A and 22B are stitched together, resulting in the generation of a spherical image. The spherical image is an image obtained by capturing all directions that can be seen from an image capturing point. In the description of the present embodiment, a spherical image is generated, but the present disclosure is not limited thereto. In some embodiments, a wide-angle image other than the spherical image may be generated. Examples of the wide-angle image include, in addition to a spherical image, a panoramic image having an angle of view of about 300 degrees in the direction of a horizontal plane, a 360-degree horizontal panoramic image obtained by capturing 360 degrees in the direction of a horizontal plane, a full dome image obtained by capturing 360 degrees horizontally and 90 degrees vertically from a horizontal line. In the following description of the present embodiment, the 360-degree horizontal panoramic image may be referred to as a 360-degree image. The spherical image may be obtained as a still image or a moving image.

In the description of the present embodiment, the spherical image is defined as an image with a solid angle of 4π steradians, but is not necessarily strictly limited to this. For example, an image with a solid angle of 4π steradians having a partial region missing is also referred to as a spherical image for the sake of convenience. Such a partial region missing includes, for example, a part corresponding to a direction directly above or below the spherical image capturing device in the image, a part of an upward vertical direction or a downward vertical direction in the spherical image, and a part of a predetermined region in the spherical image. Even with a partial region missing as described above, such an image is still referred to as a spherical image in the description of the present embodiment. This is because, in some cases, users do not carefully check the part immediately above or immediately below an object captured in an image with a solid angle of 4π steradians when viewing the spherical image. In such cases, the spherical imaging device 110 (for example, the image sensors and the optical systems) may be designed so as not to capture the part, the part of the image may not be displayed, or a logo mark or another display component may be displayed on the part. In other words, an image to be displayed is anticipated not to be the complete image or the original image with a solid angle of 4π steradians.

As an alternative to the spherical imaging device 110, for example, a terminal apparatus such as a smartphone or a tablet terminal having a function of combining multiple captured images to obtain a spherical image may be used. Alternatively, a camera attachment that can capture a spherical image may be connected to a terminal apparatus to obtain a spherical image by the terminal apparatus and the camera attachment.

The spherical imaging device 110 may include a display unit and a monitor that display a captured image, a preview image displayed at the time of image capturing, or an operation screen designed to facilitate user operations for imaging instructions or for various settings. The display unit controls the operation of the monitor. The monitor may include a touch panel display.

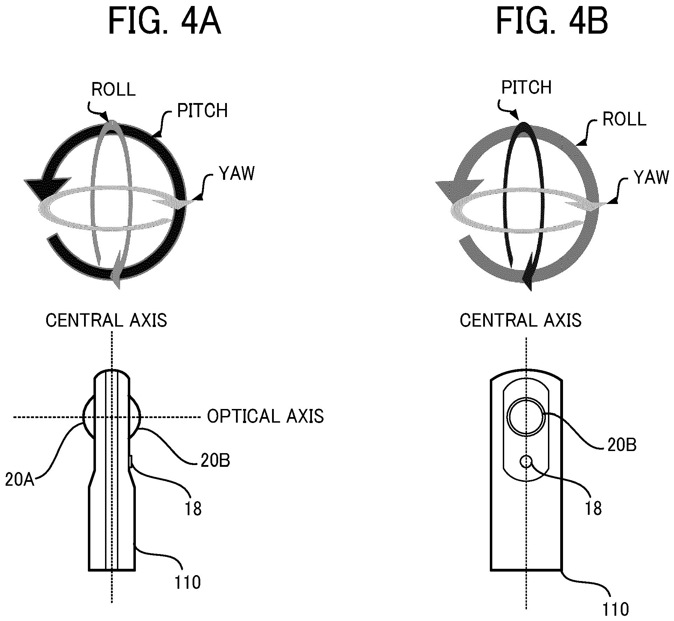

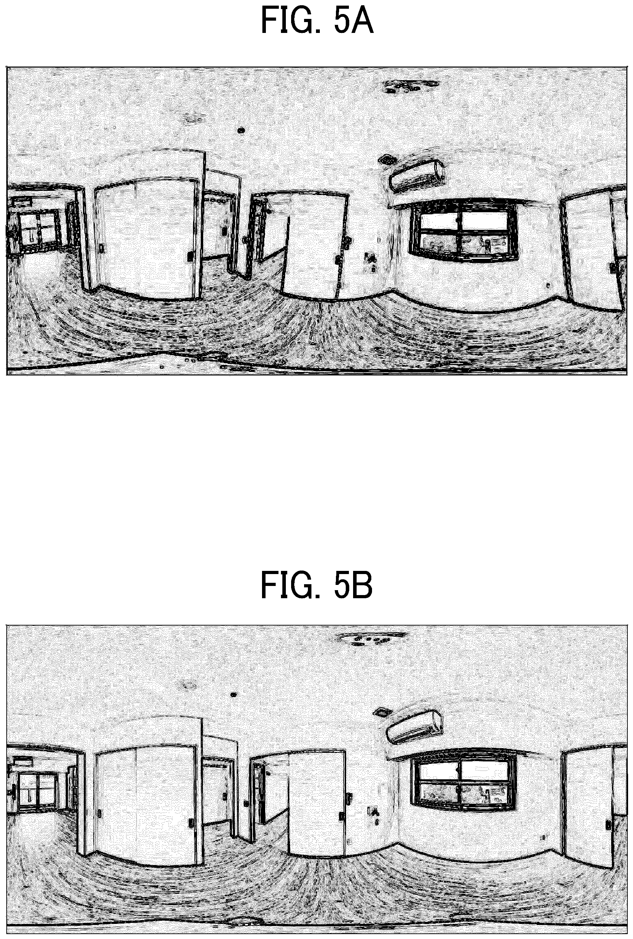

Zenith correction is described below with reference to FIGS. 4A, 4B, 5A, and 5B. FIGS. 4A and 4B are diagrams each illustrating a definition of an orientation of the spherical imaging device 110 according to the present embodiment. FIG. 4A illustrates a definition of an orientation of the spherical imaging device 110 as viewed from a side. FIG. 4B illustrates a definition of an orientation of the spherical imaging device 110 as viewed from the front.

Regarding the orientation angle of the spherical imaging device 110, the optical axis passing through the center of each of the two lenses of the spherical imaging device 110 is defined as the front-back direction of the spherical imaging device 110. As illustrated in FIG. 4, for the orientation angle of the spherical imaging device 110, a rotation angle (roll) representing rotation around the front-back direction axis of the spherical imaging device 110, a rotation angle (pitch) representing rotation around the left-right direction axis of the spherical imaging device 110, and a rotation angle (yaw) representing rotation around the up-down direction axis of the spherical imaging device 110 are defined. The pitch represents the rotation of the spherical imaging device 110 tilting forward and downward with one lens facing forward (for example, the one lens facing forward is on a side opposite to the other side on which imaging button 18 is). The roll represents the lateral rotation of the spherical imaging device 110 around the optical axis of the lenses. The yaw represents the rotation of the spherical imaging device 110 around the center axis of the housing.

In the description of the present embodiment, the front and back (rear) of the spherical imaging device 110 are defined as follows for the sake of convenience. The lens optical system 20A on the opposite side to the imaging button 18 is defined as a front lens, and a side on which imaging is performed by the front lens is defined as a front (F) side. The lens optical system 20B on the same side with the imaging button 18 is defined as a rear lens, and the side where imaging is performed by the rear lens is defined as a rear (R) side.

FIGS. 5A and 5B are diagrams each illustrating an image in relation to zenith correction performed on a spherical image according to the present embodiment. The image illustrated in each of FIGS. 5A and 5B is an image in equirectangular format obtained by projecting a spherical image onto a plane by equirectangular projection. Images that are exemplified as spherical images in some of the drawings referenced in the following description of the present embodiment have been subjected to image processing for line drawings to enhance clarity. However, this does not impose any limitation on the embodiments of the present disclosure.

Displaying a spherical image on a plane is described below. An equirectangular projection is one of the projection methods for displaying a spherical image on a plane. The equirectangular projection is an image format where the three-dimensional direction of the pixels of an image of a sphere is decomposed into latitude and longitude, and the corresponding pixel values are arranged in a square lattice. In other words, in using the Earth as an example to explain the equirectangular projection, the latitude and longitude lines are projected so as to intersect at right angles and at equal intervals. In the following description, a spherical image displayed in equirectangular format is regarded as the Earth, and for the sake of convenience, the vertical direction is regarded as the latitude, the horizontal direction is regarded as the longitude, and a center line of the midpoints of the vertical direction is regarded as the equator.

The image illustrated in FIG. 5A is the spherical image before the zenith correction. The spherical imaging device 110 may not be upright at the time of image capturing depending on a situation or environment in which image capturing is performed. In the description of the present embodiment, the gravity direction is a downward vertical direction, and the zenith direction is an upward vertical direction. The image illustrated in FIG. 5A is an image captured indoors in a typical building. In such a typical building, the height direction of a structure, namely the height directions of structure components such as doors, sliding doors, window frames, pillars, and wall surfaces are typically vertical.

However, when the spherical imaging device 110 is not upright at the time of image capturing, an image in which the height directions of the various structure components do not align with the vertical direction is generated due to, for example, misalignment in the orientation of the spherical imaging device 110 at the time of image capturing, as illustrated in FIG. 5A.

To deal with this, zenith correction is performed based on orientation data of the spherical imaging device 110 at the time of image capturing. The orientation data is data representing an orientation angle of the spherical imaging device 110 by two-axis Euler angles (roll angle and pitch angle). The orientation angle is output by, for example, an acceleration sensor included in the spherical imaging device 110. The zenith correction performed based on the orientation data can obtain a corrected spherical image in which the height directions of the various structure components align with the vertical direction, as illustrated in FIG. 5B. However, in case that the measurement accuracy of the acceleration sensor is reduced due to some factors, the acceleration sensor may fail to obtain accurate orientation data, and as a result, the zenith correction is not performed appropriately. In such a case, for example, even in the image illustrated in FIG. 5B in which the zenith direction and the gravity direction appear to align with each other, the spherical image to be output has a slight error. Even such a slight error may be undesirable because the viewer may feel unnaturalness or discomfort depending on the type of service using the spherical image. To deal with this, zenith correction for the spherical image may be performed by image processing. The factors that reduce the measurement accuracy of the acceleration sensor include, for example, measurement errors, errors in mounting the acceleration sensor, and temperature drift.

The zenith correction according to the present embodiment may not be based on the orientation data. For example, zenith correction may be performed by estimating the vertical direction (up-down direction) from a structure in the spherical image.

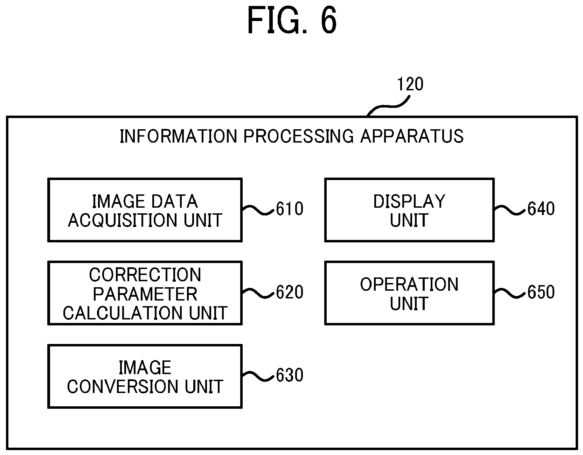

Functional units executed by one or more of the hardware components according to the present embodiment are described below with reference to FIG. 6. FIG. 6 is a block diagram illustrating a software configuration of the information processing apparatus 120 according to the present embodiment.

The information processing apparatus 120 includes functional units that are an image data acquisition unit 610, a correction parameter calculation unit 620, an image conversion unit 630, a display unit 640, and an operation unit 650. The functional units are described in detail below.

The image data acquisition unit 610 is a unit that acquires data on a spherical image to be converted into cube map format. The image data acquisition unit 610 may acquire image data, for example, from the memory 240 storing the image data, from another device via the communication I/F 250, or via the external storage device I/F 260. In the present embodiment described below, the image data of the spherical image acquired by the image data acquisition unit 610 may be a spherical image in equirectangular format, but the embodiment is not limited thereto.

The correction parameter calculation unit 620 is a unit that calculates a parameter for correcting the acquired spherical image, and serves as a correction unit in the present embodiment. The correction parameter calculation unit 620 according to the present embodiment can calculate a zenith correction parameter for performing zenith correction on a spherical image and an alignment correction parameter for performing correction involving rotation around the vertical direction as a rotation axis.

In the following description of the present embodiment, the correction involving rotation around the vertical direction as a rotation axis, in other words, correction involving rotation of the spherical image in the yaw direction, is referred to as "alignment correction." Further, in the description of the present embodiment, individually or collectively, a parameter used for performing zenith correction and a parameter used for alignment correction are commonly referred to as a "correction parameter." In other words, the correction parameter in the present embodiment indicates a parameter for converting an original image into an image to be finally output through zenith correction and alignment correction.

Zenith correction can be performed, for example, as follows. First, the acceleration sensor included in the spherical imaging device 110 detects a tilt of the spherical imaging device 110 with respect to a predetermined reference direction. The predetermined reference direction is typically the vertical direction in which gravitational acceleration acts. Then, an acceleration component signal that is input from a three-axis acceleration sensor is synchronized with the image data obtained by image capturing to obtain a tilt angle with respect to the predetermined reference direction. In the case of moving image capturing, an acceleration component signal that is input from the three-axis acceleration sensor is sampled in synchronization with a frame of the moving image data in a moving image format, and the tilt angle with respect to the predetermined reference direction is obtained. Then, time-series data at a rate equivalent to the frame rate of the image data in the moving image format is recorded.

A conversion table for converting each of the two fisheye images captured by the two image sensors 22A and 22B into the spherical coordinate system and generating a spherical image is prepared in advance. The conversion table is data (conversion data) generated in advance by, for example, a manufacturer in accordance with a predetermined projection model, based on, for example, design data of the lens optical system. The conversion table is data for converting fisheye images into a spherical image in which a direction directly above the spherical imaging device 110 aligns with a vertical line. In the present embodiment, when the spherical imaging device 110 is tilted and the vertical line does not align with the direction directly above the spherical imaging device 110, the conversion data is modified according to the tilt, and the modified conversion data affects zenith correction.

The correction parameter calculation unit 620 calculates a parameter for modifying the conversion table described above so that the zenith direction of the image (the direction pointing to a point directly above the observer) aligns with a detected vertical line (straight line formed by the vertical direction in which gravity acts), according to the obtained tilt angle. As a result, when fisheye images are converted into a spherical image using the modified conversion table, the spherical image is generated in a form in which the modification is reflected so that the zenith direction aligns with a vertical line according to the tilt.

The correction parameter calculation unit 620 can calculate a parameter for zenith correction and a parameter for alignment correction based on, for example, one or more of various objects or structures (structure components) included in the spherical image.

For example, the correction parameter calculation unit 620 can identify a column in a spherical image and calculate a parameter for correcting the zenith direction from the tilt of the column. The correction parameter calculation unit 620 can calculate an alignment correction parameter based on a specific subject in the spherical image. Examples of the specific subject include a characteristic object and a relatively large wall in the spherical image, but are not limited thereto. The correction parameter calculation unit 620 according to the present embodiment can calculate an alignment correction parameter (that is, a rotation angle in the yaw direction) with which the specific subject is included in the image on the front side in a cube map format.

The correction parameter calculation unit 620 according to the present embodiment may not use the original image data of the spherical image to calculate the various parameters, but may use, for example, image data of the spherical image whose image size is reduced (reduced image data). The correction parameter calculation unit 620 can reduce the image size while preserving a feature in the reduced image, before calculating a parameter. For example, the correction parameter calculation unit 620 can reduce the image size to about 10% to about 60% of the original image. When the size of the original image is less than a predetermined threshold, the correction parameter calculation unit 620 may calculate a parameter without reducing the image. Reducing the size of the spherical image and then calculating a parameter as described above can reduce the processing load and shorten the time taken for the parameter calculation.

The parameter calculated by the correction parameter calculation unit 620 may be output to the image conversion unit 630 or the display unit 640, or may be stored in the memory 240.

The image conversion unit 630 is a unit that converts a spherical image in equirectangular format into a spherical image in cube map format. The image conversion unit 630 according to the present embodiment converts a spherical image into an image in cube map format by associating the coordinates of the spherical image on a virtual spherical surface with the coordinates of the faces (front face, back face, right face, left face, top face, and bottom face) of a virtual cube. The image converted by the image conversion unit 630 may be stored in the memory 240 or may be transmitted to the display unit 640 and displayed by the display unit 640.

In case where an annotation is added to the spherical image, the image conversion unit 630 can also convert a display position of the annotation into coordinates corresponding to the cube map format. For example, a creator of an image may add an annotation to a spherical image in order to give information on the spherical image to a viewer of the image. Examples of the annotation include text, a link, a shape, image data, audio data, and video data, but the embodiments of the present disclosure are not limited thereto. The image conversion unit 630 according to the present embodiment can convert the display position (coordinates) of the annotation on the spherical image in equirectangular format into coordinates on the spherical image in cube map format.

The display unit 640 is a unit that controls the operation of the monitor 270 and displays the spherical image in cube map format that has been corrected with the parameter output by the correction parameter calculation unit 620. The display unit 640 can also display an annotation together with the spherical image.

The operation unit 650 is a unit that receives an operation by the input device 280 and performs various operations.

The operation unit 650 according to the present embodiment can perform operations such as enlargement and reduction of a displayed image and selection of an annotation.

The software configuration described above corresponds to functional units. Each of the functional units is implemented by the CPU 210 executing a program of the present embodiment to cause corresponding one or more of the hardware components to function. Each of the above-described functional units may be implemented by software, hardware, or a combination of software and hardware.

Further, all of the above-described functional units do not necessarily have to be configured as illustrated in FIG. 6. For example, in some embodiments, any one of the above-described functional units may be implemented by the information processing apparatus 120 and another apparatus that operate in cooperation with each other. Further, in some embodiments, the image data acquisition unit 610, the correction parameter calculation unit 620, or the image conversion unit 630 may be included in the spherical imaging device 110 or an information processing apparatus such as a server connected via a network, and processing of each of the functional units may be performed in the spherical imaging device 110 or the information processing apparatus.

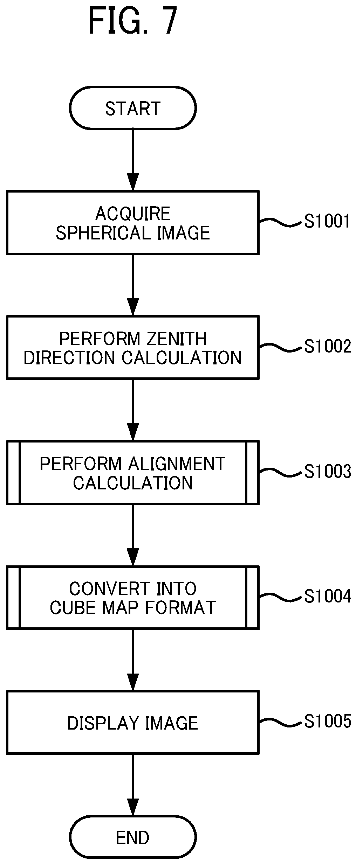

A process performed by the above-described functional units is described below with reference to FIG. 7.

FIG. 7 is a flowchart of a process for displaying a spherical image in cube map format according to the present embodiment.

In Step S1001, the image data acquisition unit 610 acquires a spherical image. The image data acquisition unit 610 can acquire image data obtained by reducing the original image size of the image in equirectangular format.

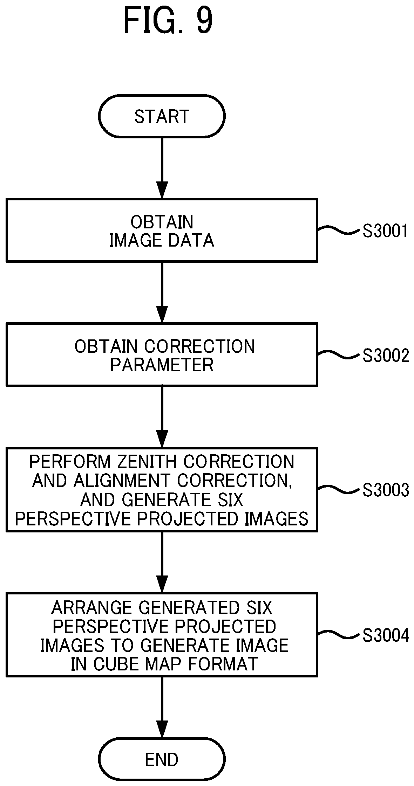

In Step S1001, the original image data may be obtained instead of the reduced image data. In this case, a correction parameter is to be calculated based on the original image data. In the case of the original image data, processing of Step S3001 in FIG. 9, which is described later, may be omitted, and zenith correction may be performed in the subsequent step, Step S1002, and then alignment correction may be performed with an alignment correction value obtained in alignment calculation (in this case, the alignment correction value is a correction parameter). Further, the spherical image may be converted into cube map format based on the original image data acquired in the S 1001, and then zenith correction and alignment correction may be performed.

As described above, acquiring the original image data in Step S1001 omits the processing of reading the spherical image again in converting the spherical image into an image in cube map format, and this can simplify the design of image processing.

Then, in Step S1002, the correction parameter calculation unit 620 performs zenith direction calculation for the spherical image. In Step S 1002, the image conversion unit 630 can perform zenith correction and generate a zenith-corrected spherical image.

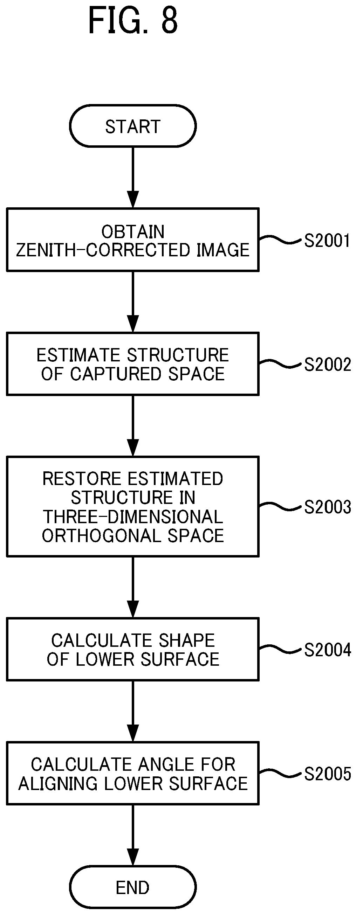

In the subsequent step, Step S1003, the correction parameter calculation unit 620 obtains the spherical image on which zenith correction has been performed in Step S1002 and performs alignment calculation of calculating an alignment correction parameter. The processing of Step S1002 and the processing of Step S1003 may be performed in the reverse order to the order illustrated in FIG. 7. The alignment calculation is described below with reference to FIG. 8.

In Step S2001, the correction parameter calculation unit 620 obtains a zenith-corrected image that has been obtained by the zenith correction of Step S1002 of FIG. 7.

Subsequently, in Step S2002, the correction parameter calculation unit 620 estimates, based on the image, a structure of the captured space (a spatial structure of the captured image). In Step S2003, the correction parameter calculation unit 620 reconstructs the estimated spatial structure in a three-dimensional orthogonal space.

In the subsequent step, Step S2004, the correction parameter calculation unit 620 calculates the shape of the lower surface in the captured space based on a result output in Step S2003. In the description of the present embodiment, the lower surface in the captured space includes, for example, the floor surface of an indoor space and the ground surface of an outdoor space. In Step S2005, the correction parameter calculation unit 620 calculates an angle for alignment for the lower surface. The angle for alignment may be, for example, an angle for rotation to cause a specific subject in the image to be placed front and center, but the present embodiment is not limited thereto. The angle calculated in Step S2005 can be used as an alignment correction parameter. After that, the process of FIG. 8 ends.

Returning to FIG. 7, the description is continued below. The alignment correction parameter is obtained by the processing of Step S1003. In other words, the correction parameter with which zenith correction and alignment correction are simultaneously performable is obtained by the processing of Step S1002 and the processing of Step S1003.

Then, in Step S1004, the image conversion unit 630 converts the image into cube map format based on the correction parameter. A process for converting the image into cube map format is described below with reference to FIG. 9.

In Step S3001, the image conversion unit 630 obtains the original data on the image in equirectangular format. If the original image data has been obtained in Step S1001 of FIG. 7, the processing of Step S3001 is omitted.

Subsequently, in Step S3002, the image conversion unit 630 obtains the correction parameter obtained in Steps S1002 and S1003. In the subsequent step, in Step S3003, the image conversion unit 630 performs zenith correction and alignment correction by applying the correction parameter obtained in Step S3002 to the image data obtained in Step S3001, and generates six perspective projected images. The image conversion unit 630 serves as a correction unit in the present embodiment.

Then, in Step S3004, the image conversion unit 630 arranges the six perspective projected images generated in Step S3003 in a predetermined arrangement to generate an image in cube map format. After that, the process of FIG. 9 ends.

Returning to FIG. 7, the description is continued below. After the image in cube map format is generated in Step S1004, in Step S1005, the display unit 640 displays on the monitor 270 the spherical image that has been corrected with the calculated correction parameter and converted into cube map format. After that, the process of FIG. 7 ends.

In the above-described embodiment, the six perspective images are generated to generate the image in cube map format after the zenith correction and the alignment correction are performed. Alternatively, in applying the correction parameter obtained in Step S3002 based on the reduced image data obtained in Step S1001 to the original image data obtained in Step S3001, zenith correction and alignment correction may be performed, after the six perspective images are generated, on the image in cube map format.

In the above-described embodiment, the zenith correction and the alignment correction are performed. However, for example, when the spherical imaging device 110 is fixed to a tripod so as to be upright at the time of image capturing, a tilt from the vertical direction is hardly present in a captured image, or a slight tilt from the vertical direction that does not affect the alignment correction or the image viewing is present in the captured image. In such a case, the zenith correction in Step S1002 may be omitted (in other words, the zenith correction is not necessarily performed on such a spherical image), and the alignment calculation of calculating an alignment correction parameter in Step S1003 may be performed with respect to the spherical image that has not been subjected to the zenith correction. In this case, the information processing apparatus 120 may include a correction selection unit, so that the display unit 640 may cause the monitor 270 to display a check box allowing a user to perform an operation with the input device 280 to select whether to perform zenith correction. Alternatively, without such a user operation of selecting whether to perform zenith correction, a threshold value may be set to the orientation data described above (for example, 5 degrees of tilt from the vertical direction), and the zenith correction in Step S 1002 may be performed when the tilt from the vertical direction exceeds the threshold value, and may not be performed when the tilt is equal to or less than the threshold value. By so doing, unnecessary zenith correction is not performed while alignment correction for effectively coping with an unnatural image caused by a discontinuous change in perspective in the images of the faces in cube map format is performed. As a result, the processing time until displaying the spherical image converted into cube map format in Step S 1005 can be reduced.

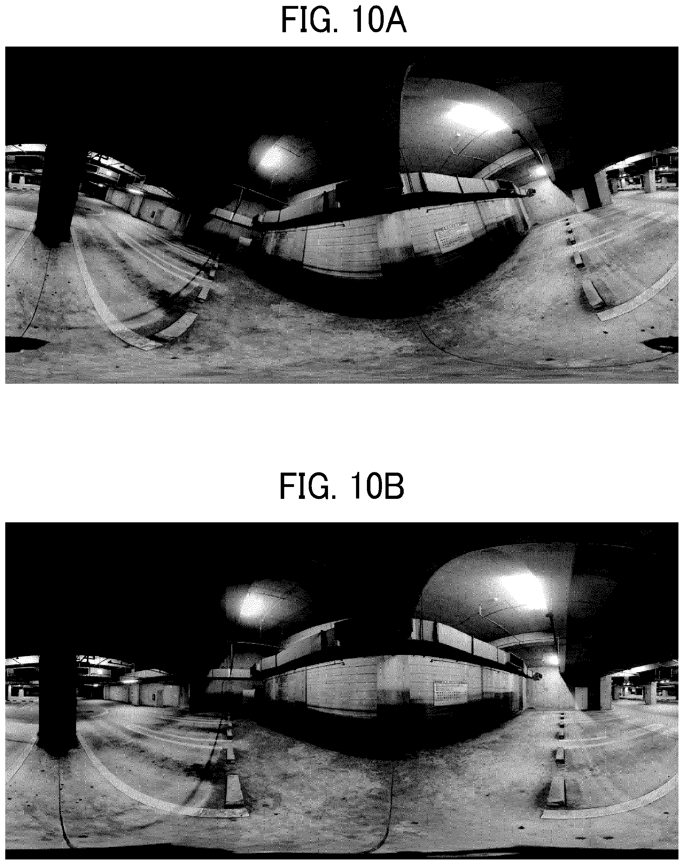

Image processing according to the present embodiment is described below, by using specific examples. FIGS. 10A and 10B are diagrams illustrating zenith correction according to the present embodiment. FIG. 10A is a diagram illustrating a spherical image that is original, and FIG. 10B is a diagram illustrating a spherical image after zenith correction is performed. As described with reference to FIG. 5, zenith correction can be performed based on the orientation data of the spherical imaging device 110 at the time of image capturing or on the basis of an object in the image. As illustrated in FIGS. 10A and 10B, a column that is tilted in FIG. 10A is made substantially vertical in FIG. 10B by zenith correction. As described above, by appropriately correcting the zenith direction of the spherical image the visibility of the image is enhanced.

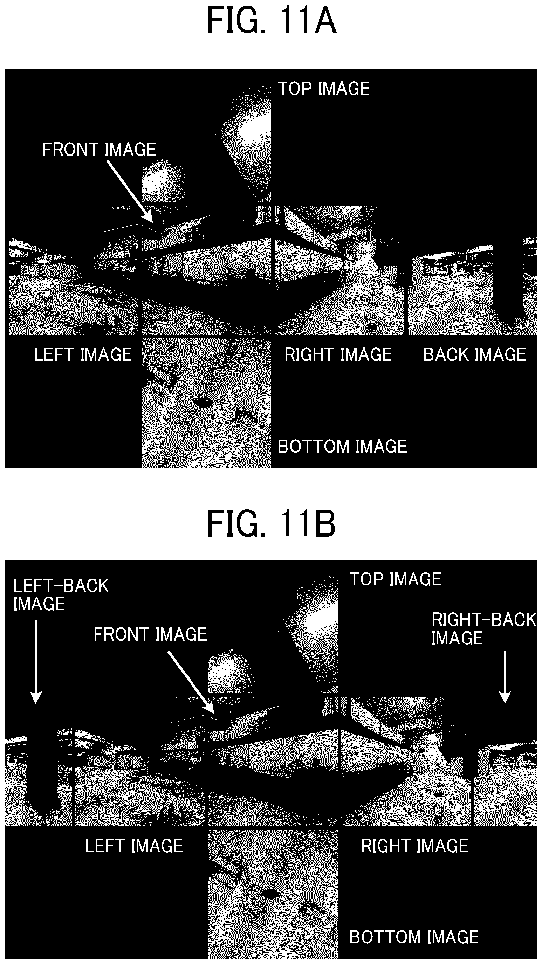

FIGS. 11A and 11B are diagrams each illustrating a spherical image converted into cube map format according to the present embodiment. In each drawing to be referred to describe a spherical image in cube map format below, text and arrows such as "FRONT IMAGE," "BACK IMAGE," "LEFT IMAGE," "RIGHT IMAGE," "TOP IMAGE," and "BOTTOM IMAGE" are added for the sake of convenience and are not included in the spherical image.

FIG. 11A is a diagram illustrating a spherical image in cube map format converted from the spherical image in equirectangular format illustrated in FIG. 10B. The spherical image in cube map format illustrated in FIG. 11A includes a left image, a front image, a right image, and a back image that are arranged in a line in the middle layer, and further includes a top image and a bottom image that are arranged above and below the front image, respectively.

FIG. 11B is a diagram illustrating a spherical image in cube map format according to the present embodiment. The spherical image in cube map format illustrated in FIG. 11B includes a left-back image, a left image, a front image, a right image, and a right-back image that are arranged in a line in the middle layer, and further includes a top image and a bottom image that are arranged above and below the front image, respectively. The left-back image and the right-back image are images obtained by vertically dividing the back image of FIG. 11A into two. As described above, by vertically dividing the back image into two and arranging each of the obtained two images at corresponding one of the ends of the display screen horizontally, the front image is arranged at the center, and the image as a whole can be displayed vertically and horizontally symmetrical. This allows the viewer to easily recognize the subject compared to FIG. 11A. Further, in arranging the images of the faces of a cube map, providing boundary lines between the images of the faces of the cube map as illustrated in FIGS. 11A and 11B can enhance the visibility of the images. Further, since there are multiple patterns (11 patterns, mathematically) for arranging the faces of an unfolded cube, the images of the faces of the cube may be arranged in any manner other than the manner illustrated in FIG. 11A or FIG. 11B, in other words, the image in cube map format may be displayed in any suitable manner.

In the examples of FIGS. 11A and 11B, the images of the faces of the cube map are arranged at regular intervals so as to have a gap between the adjacent images. Further, there is a background area (which is an area in black where text and arrows for the sake of convenience of description are placed, for example, "FRONT IMAGE" in FIGS. 11A and 11B). The background area serves as a background with respect to the spherical image in cube map format, and the color (black in FIGS. 11A and 11B) of the background area appears as a boundary line in a gap between the adjacent images of the faces. The gaps may be eliminated to display the images of the faces so that the images of the faces are displayed in a connected manner. It is effective to provide a boundary line between the images of the faces. Further, regardless of the presence of the gap, the front image can be displayed in an emphasized manner by displaying, for example, a boundary line surrounding the periphery of the front image so as to emphasize a part of the image as a whole. For example, a boundary line is displayed when the cursor is placed on the front image for selection by using a mouse serving as the input device 280 or when the front image is selected by clicking the mouse. Further, when the cursor is placed on the front image for selection or when the front image is selected, the front image may be displayed in a manner different from the other images that correspond to the other faces. For example, the other images of the other faces may be displayed with reduced brightness, or the front image may be displayed with increased brightness, and accordingly, the front image is emphasized.

Even though FIG. 11B illustrates the spherical image in cube map format in which the back image is vertically divided into two to obtain the two images, and each of the obtained two images are arranged at the corresponding one of the ends of the display screen horizontally, both of the image illustrated both FIG. 11A and the image illustrated in FIG. 11B are the unfolded images each having six faces, the left, front, right, back, top, and bottom faces. In the case of a 360-degree horizontal panoramic image obtained by capturing 360 degrees in the direction of a horizontal plane described above, an image in cube map format with an unfolded cube map with four faces, left, front, right, and back faces may be used.

Further, when converting a spherical image or a 360-degree image into an image in cube map format, faces for conversion may be selected by a selection unit according to a user operation. For example, the display unit 640 causes the monitor 270 to display checkboxes for selecting faces of "all", "left", "front", "right", "back", "top", and "bottom", and the checkboxes allow the user to select faces for conversion.

In this case, the information processing apparatus 120 includes a selection unit, and the user may select a face for conversion using the input device 280. Further, regarding faces that are not selected by the selection unit, the corresponding part of the original image may not be subjected to conversion into cube map format, or the corresponding part of the original image may be also converted by the image conversion unit 630 but not displayed on the monitor 270.

The image of FIG. 11A and the image of FIG. 11B are the spherical images each of which has been subjected to zenith correction alone and then converted into cube map format, and in such images, one of the faces is displayed with a different perspective. This causes difficulty in grasping the configuration of the entire spherical image. For example, although a wall included in the front image and a wall included in the right image in FIGS. 11A and FIG. 11B are a continuous wall on the plane, discontinuity occurs in the change in perspective at the boundary between the two images, and the walls in the two images are displayed at angles different from each other. Due to this, it is difficult for the viewer of the image to recognize whether the walls included in both images are the continuous wall on the plane.

To deal with this, in the present embodiment, a subject included in the image is recognized based on the spherical image, and correction involving rotation in the yaw direction, that is, alignment correction is performed based on, for example, the position or the structure of the subject.

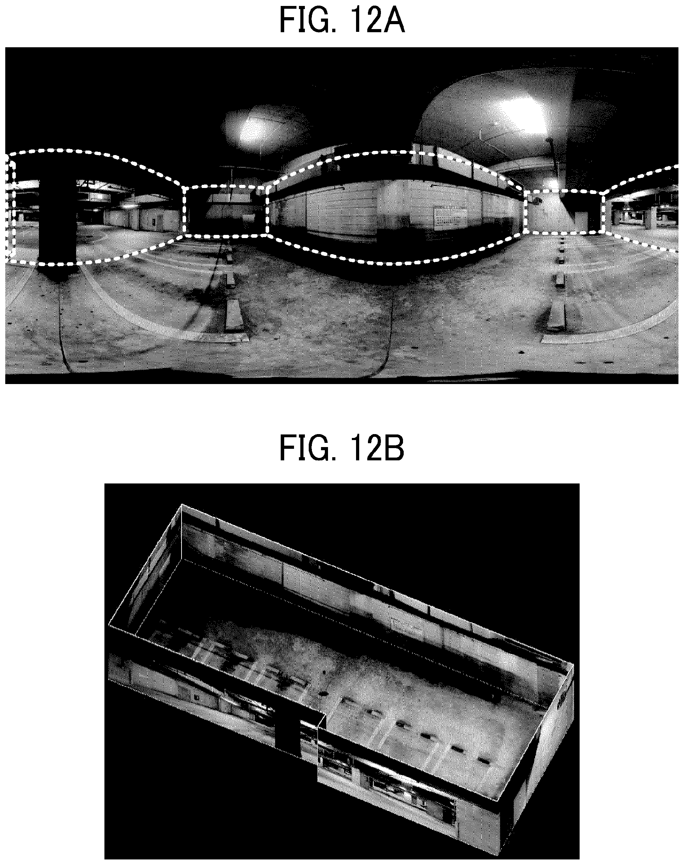

FIGS. 12A and 12B are diagrams each illustrating an image from which a structure is estimated according to the present embodiment. FIG. 12A illustrates an image in which a subject that is included in the spherical image in equirectangular format illustrated in FIG. 10B is identified. In FIG. 12A, wall surfaces in the captured space are identified, and broken lines in the drawing indicate borders between the wall surfaces.

In the image illustrated in FIG. 12B, the structure of the captured space is estimated based on the wall surfaces identified in FIG. 12A. The upper surface is omitted from the viewpoint of easy viewing of the drawing. As illustrated in FIG. 12B, the captured space of the spherical image is specified as an L-shaped space.

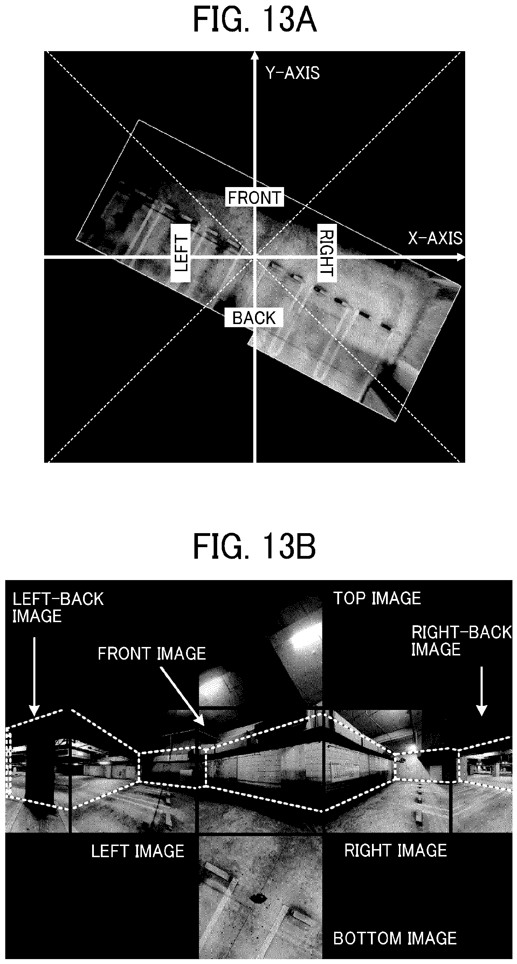

A case where alignment correction is performed based on the space illustrated in FIG. 12B is described below. FIGS. 13A and 13B are diagrams each illustrating specifying a structure in an image in cube map format according to the present embodiment. FIG. 13A illustrates a view of a specified space from above according to the present embodiment.

FIG. 13B illustrates the spherical image of FIG. 11B on which the borders of the wall surfaces are indicated by being superimposed.

As illustrated in FIG. 13A, the front image (FRONT), the back image (BACK), the right image (RIGHT), and the left image (LEFT) of the spherical image in cube map format are assigned by dividing the space viewed from above into four at every 90 degrees. The image illustrated in FIG. 13B is obtained by superimposing the borders of the identified wall surfaces on the spherical image of FIG. 11B. The broken lines in FIG. 13B indicate the borders of the wall surfaces.

As illustrated in FIG. 13B, although the front image and the right image include a border of a continuous wall on the plane, the border of the continuous wall is not indicated by a straight line, but the angle of the broken line in the front image is different from the broken line in the right image, and it is difficult for the viewer of the spherical image to recognize the structure in the image. To deal with this, alignment correction can be performed to enhance the visibility.

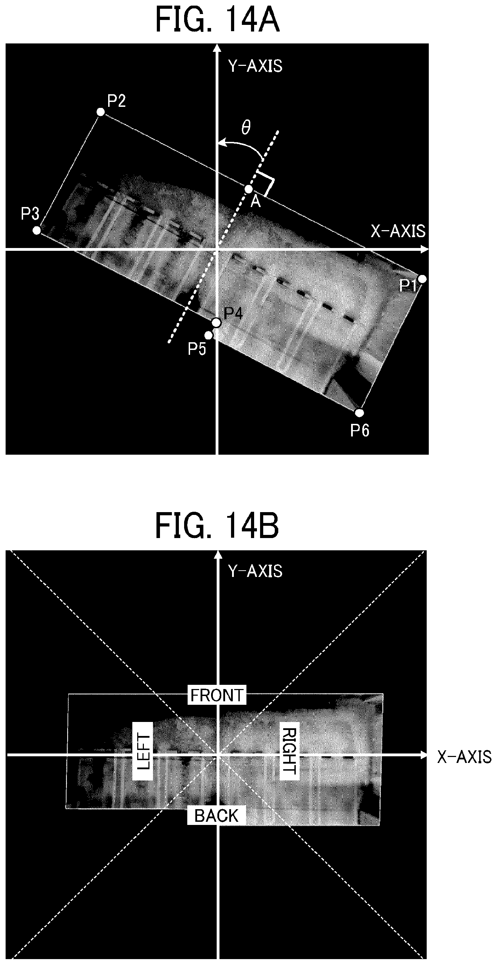

FIGS. 14A and 14B are diagrams each illustrating alignment correction according to the present embodiment. FIG. 14A is a view of a captured space from above. When the vertices of a plane of the captured space viewed from above are P1 to P6, the distance between P1 and P2 is the greatest. By performing alignment correction in a manner that the wall surface between P1 and P2 is included in the front image, the visibility is enhanced.

The alignment correction parameter (a rotation angle θ in the yaw direction) is obtained as follows. First, a straight line (a broken line in FIG. 14A) that passes through the origin at which an X-axis and a Y-axis intersect (typically, the position at which the spherical imaging device 110 captures an image) and is orthogonal to a line segment P1-P2 is placed. A point at which the broken line and the line segment P1-P2 intersect is set to Point A, and the coordinates of Point A are set to (x1, y1). Then, the rotation angle θ at which Point A is located at the center of the front image (i.e., on the Y-axis) is obtained. The rotation angle θ is given by π/2-arctan2 (y1, x1).

FIG. 14B illustrates the captured space of the spherical image viewed from above after the correction involving rotation with the alignment correction parameter obtained as described with reference to FIG. 14A is performed.

As illustrated in FIG. 14B, a wall surface corresponding to the wall surface between P1 and P2 in FIG. 14A is placed so as to be orthogonal to the line of sight (Y-axis) toward the front image (FRONT). As a result, the visibility of the spherical image in cube map format is enhanced.

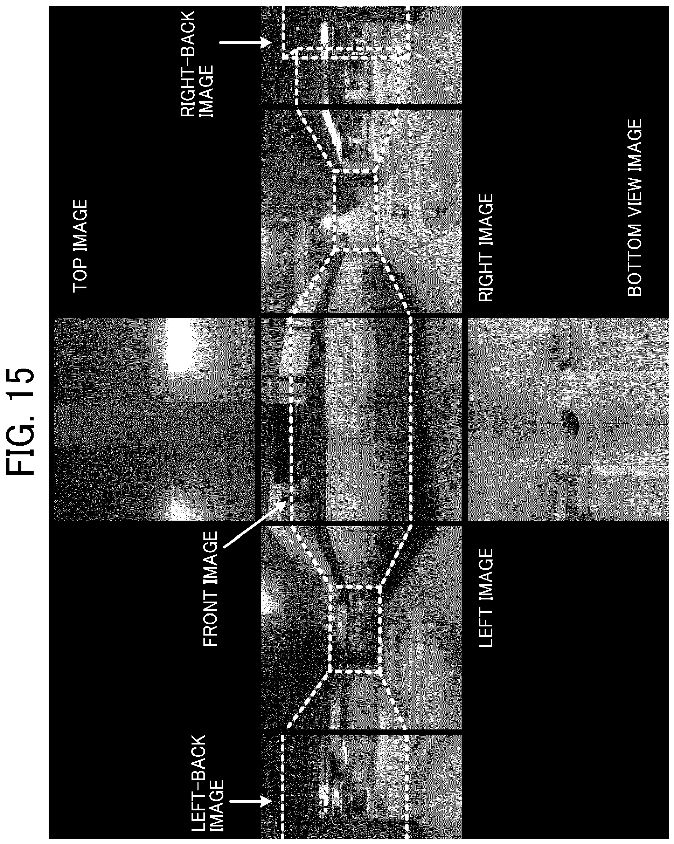

FIG. 15 is a diagram illustrating a spherical image in cube map format that has been subjected to alignment correction according to the present embodiment. The spherical image illustrated in FIG. 15 is obtained by performing alignment correction on the image illustrated in FIG. 11B. Text, arrows, and broken lines in FIG. 15 are added for the sake of convenience of description, and are not included in the spherical image according to the present embodiment.

A parameter calculated by the correction parameter calculation unit 620 is used when the image conversion unit 630 converts an image and when the display unit 640 displays a spherical image in cube map format, and accordingly, the spherical image such as one illustrated in FIG. 15 can be displayed. As indicated with a front image in FIG. 15, the line of sight in the image is directly facing a wall surface, and a border between a wall and a ceiling and another border between the wall and a floor are parallel to the upper and lower sides of the front image. Further, as for a left image and a right image in FIG. 15, the images are displayed in a manner that wall surfaces are directly facing the viewer. Compared with the visibility of the image illustrated in FIG. 11B, the visibility of the spherical image is enhanced by performing the alignment correction according to the present embodiment.

As illustrated in FIG. 15, the alignment correction according to the present embodiment can enhance the visibility of a spherical image in cube map format. In particular, in the case of a spherical image captured in an indoor space, when the spherical image in cube map format is displayed without performing alignment correction, the perspective of a captured wall surface varies for each face of the cube map, and the captured wall surface is hard to be viewed. In other words, the processing of the present embodiment is effective for a spherical image captured in an indoor space. Accordingly, in some embodiments, whether a spherical image is an image captured in an indoor space is determined, and then, alignment correction is performed if the spherical image is an image captured in an indoor space.

In the above-described embodiments of the present disclosure, the alignment correction is performed so that the wall surface having the large side length is directly facing the viewer. However, the embodiments of the present disclosure are not limited thereto. In some embodiments, a specific subject included in an image is identified, and correction to cause the specific subject to be easily visible is performed. In other words, a reference for performing alignment correction is not limited to a wall surface. For example, alignment correction may be performed so that a relatively large subject or a characteristic subject is included in the front image.

Further, the correction parameter calculation unit 620 can identify a subject in an image and specify a structure of a captured space, as part of alignment correction parameter calculation. The images illustrated in FIGS. 10A to 14B are given for the purpose of describing the processing according to the present embodiment, and the images illustrated in FIGS. 10A to 14B may not necessarily be generated in the embodiments of the present disclosure.

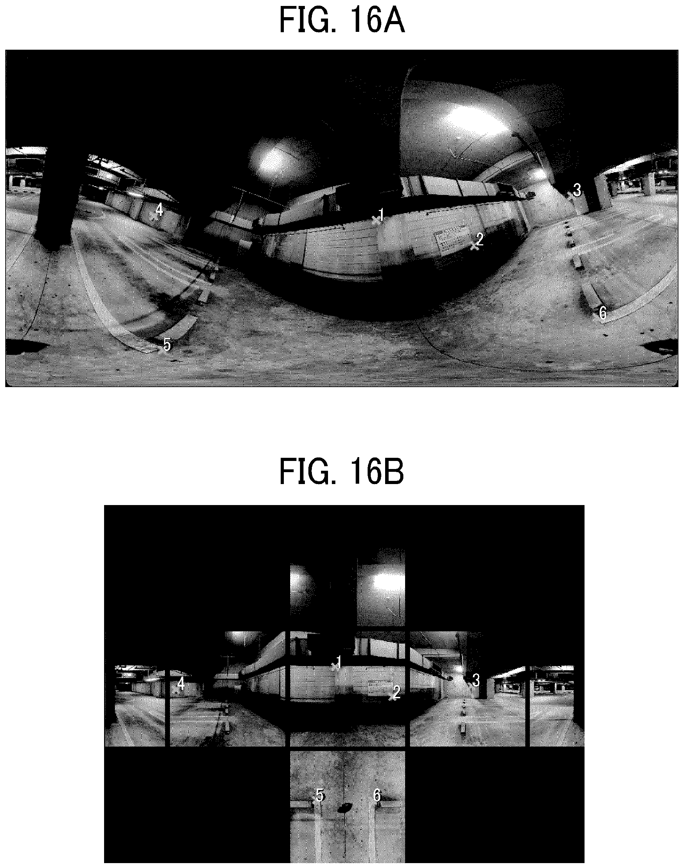

The image conversion unit 630 can associate coordinates on a spherical image in equirectangular format with coordinates on a spherical image in cube map format. Accordingly, as illustrated in FIGS. 16A and 16B, coordinates on a spherical image in equirectangular format correspond to specific coordinates on a spherical image in cube map format. FIGS. 16A and 16B are diagrams illustrating a correspondence relationship of coordinates between the spherical image in equirectangular format and the spherical image in cube map format according to the present embodiment.

In FIG. 16A, some points are illustrated on the spherical image in equirectangular format.

As illustrated in FIG. 16A, six points are illustrated on the spherical image. Corresponding to the points on the equirectangular image, coordinates on the cube map image can be obtained by conversion processing performed by the image conversion unit 630. In case that the correction parameter calculation unit 620 has calculated parameters for zenith correction and alignment correction, coordinates on the cube map image can be obtained so that the coordinates are compatible with the zenith correction and the alignment correction, by applying the parameters.

FIG. 16B is a diagram illustrating the spherical image in cube map format including points that correspond to the points on the image illustrated in FIG. 16A. As illustrated in FIG. 16B, the points corresponding to the points in FIG. 16A are arranged on the spherical image that has been subjected to zenith correction and alignment correction and obtained by conversion into cube map format.

Such a correspondence relationship of coordinates between display formats is not limited to between an equirectangular format and a cube map format, and for example, associating corresponding coordinates can be performed even with a full-view spherical image in perspective projection format or a fisheye image. Further, associating corresponding coordinates between display formats is useful in, for example, displaying an annotation in a spherical image. In the following description of the present embodiment, an annotation is displayed in a spherical image.

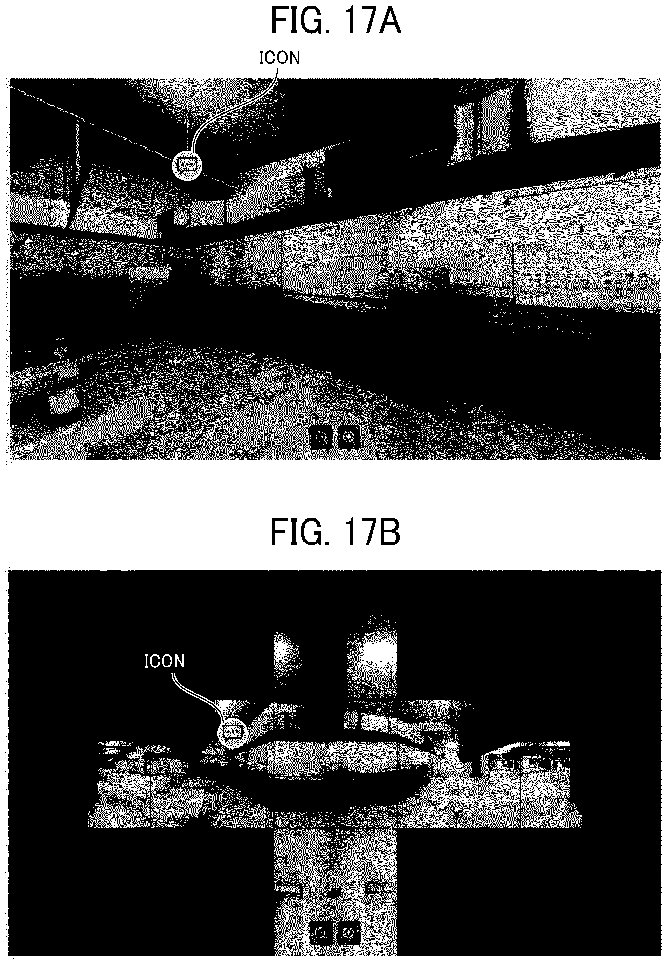

FIGS. 17A and 17B are diagrams each illustrating displaying an annotation according to the present embodiment. FIG. 17A is a diagram illustrating an image in perspective projection format including an annotation, according to the present embodiment. FIG. 17B is a diagram illustrating a spherical image in cube map format including an annotation, according to the present embodiment. As illustrated in each of FIGS. 17A and 17B, an icon representing an annotation is displayed in the image. When a viewer of the image selects an icon by an operation such as clicking or tapping, details of the annotation are displayed.

When the spherical image is converted into cube map format, the icon illustrated in FIG. 17A is displayed in the left image of the cube map image, as illustrated in FIG. 17B. The position of the icon in FIG. 17A corresponds to the position of the icon in FIG. 17B. When an annotation is added to an image, the image conversion unit 630 according to the present embodiment can convert the image into a spherical image in cube map format while maintaining the position of the annotation. Accordingly, even when an annotation is added to a specific object in an image before conversion, the annotation can be added to the position of the same object in the spherical image converted into cube map format.

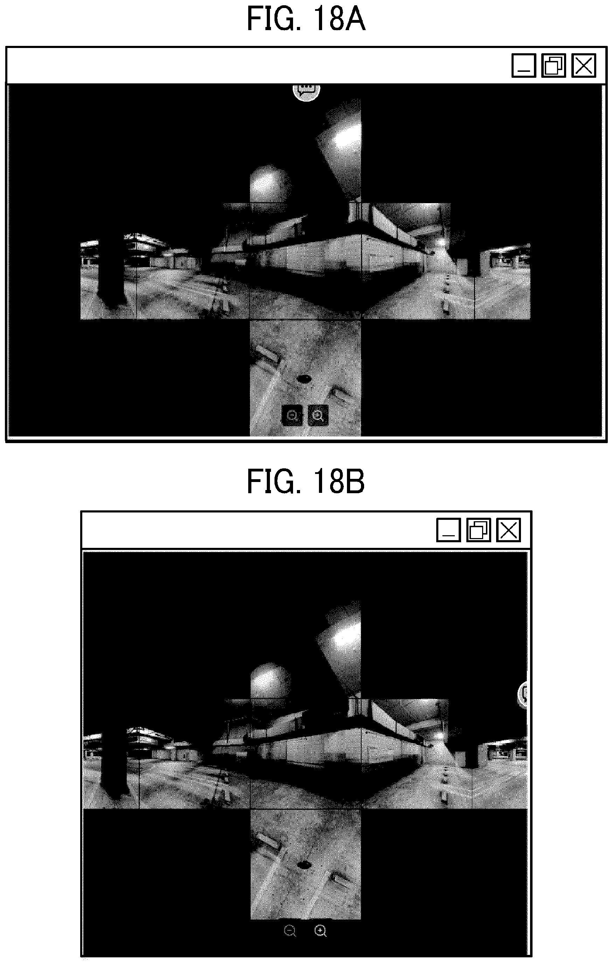

However, depending on the position where the annotation is added, the icon may not be appropriately displayed on the spherical image in cube map format. For example, when a spherical image displayed in equirectangular format or in perspective projection format in which an annotation is added to a specific object is converted into cube map format, the annotation may be positioned near an end of the face of the cube map. In such a case, as illustrated in FIGS. 18A and 18B, the icon representing the annotation may be partially cut off and may not be appropriately displayed. FIGS. 18A and 18B are diagrams each illustrating a spherical image in cube map format on which an icon is not appropriately displayed.

In FIG. 18A, because the annotation is added near the upper end of the top image, an upper part of the icon is cut off. In FIG. 18B, because the annotation is added to the upper right portion of the right-back image, a right part of the icon is cut off. In case that the icon is cut off as illustrated in each of FIGS. 18A and 18B, the viewer of the spherical image may not easily notice the annotation, and this may cause inconvenience.

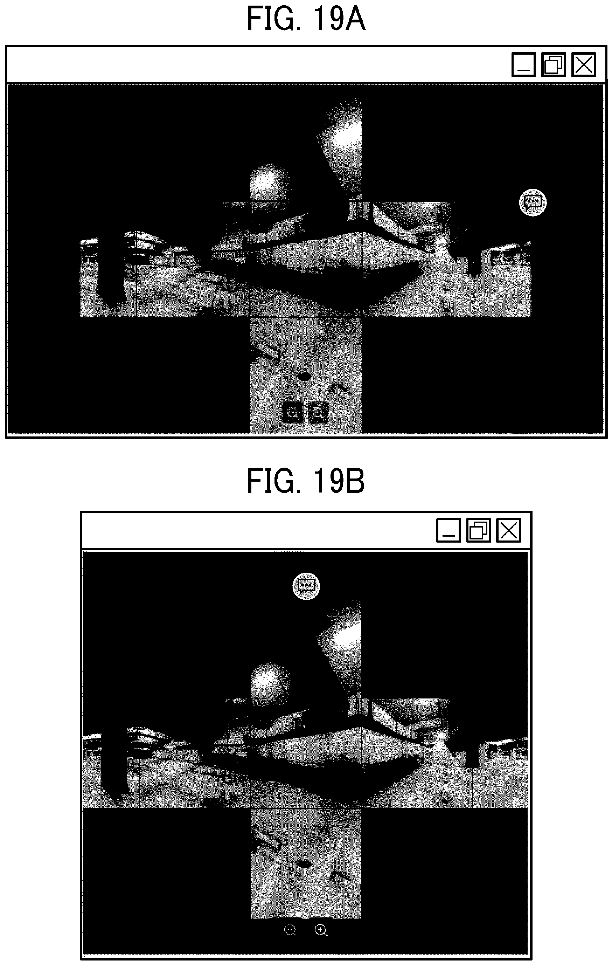

To deal with this, in the present embodiment, the icon of the annotation is positioned at a position with high visibility as illustrated in each of FIGS. 19A and 19B. FIGS. 19A and 19B are diagrams each illustrating a spherical image in cube map format on which an icon is appropriately positioned, according to the present embodiment. Since the outer circumference of the spherical image in cube map format has two equivalent spatial positions (except for the four corners of the center face (the front image in the present embodiment)), the icon can be positioned at an appropriate position based on the size of the display screen.

FIG. 19A illustrates the spherical image on which the icon that is cut off in FIG. 18A is positioned at an appropriate position so as to be displayed. In other words, the position of the icon in FIG. 18A and the position of the icon in FIG. 19A are the same position on the spherical image, that is, the positions have the same coordinates. As illustrated in FIG. 19A, the icon is positioned at the upper right of the right-back image, and there is a relatively large margin around the upper right of the right-back image in the display area of the screen, and thus the icon can be displayed without being cut off.

In other words, the icon is positioned such that a first area that is obtained by combining the spherical image in cube map format and the icon, is included inside a second area that is the display area of the monitor 270 on which the spherical image in cube map format and a background area corresponding to the background (area in black in each of FIG. 19A and 19B) are displayed. When the first area is defined as an area obtained by combining the spherical image in cube map format and a part of the icon protruding from the spherical image in cube map format, and the second area is defined as the display area of the monitor 270, an area satisfying the relationship of the second area and the first area is an area having a relatively large margin in the display area of the screen. The part of the icon protruding from the spherical image in cube map format is displayed in a superimposed manner on the background area.

FIG. 19B illustrates the spherical image on which the icon that is cut off in FIG. 18B is positioned at an appropriate position so as to be displayed. In other words, the position of the icon in FIG. 18B and the position of the icon in FIG. 19B are the same position on the spherical image, that is, the positions have the same coordinates. As illustrated in FIG. 19B, the icon is positioned at the upper part of the top image, and there is a relatively large margin above the top image in the display area of the screen, and thus the icon can be displayed without being cut off. In the example of FIG. 19B, as in FIG. 19A, the area having a relatively large margin is an area satisfying the relationship of the second region and the first region. The part of the icon protruding from the spherical image in cube map format is displayed in a superimposed manner on the background area.

Further, in alternative to the method of positioning an icon at an appropriate position as illustrated in each of FIG. 19A and 19B, a method of reducing a spherical image in cube map format may be used in case that an icon is partially cut off on a spherical image as illustrated in each of FIG. 18A and 18B. By reducing the spherical image of each of FIG. 18A and 18B, the icon at the position on the image in each of FIG. 18A and 18B can be displayed without being cut off. By displaying an icon as described above, a margin for displaying the icon in a display area can be allocated.

As illustrated in FIGS. 19A and 19B, positioning an icon at a position where the icon is fully visible within a screen allows a viewer of an image on the screen to easily recognize the icon. Accordingly, regarding a spherical image in cube map format, the visibility of the image and the annotation added to the image can be increased.

Further, when an icon is displayed in a superimposed manner on a background area, the display color of the icon may be a color different from the color of the background area, such as a color that attracts the eyes of users, an opposite color that is opposite to the color of the background area, or a color close to the opposite color. By so doing, the visibility of the annotation can be increased.

In case that an annotation is "text" or a "handwritten character/hand-drawn shape," the display color of the character or shape may be changeable.

Further, users who use the service may be individually identified by, for example, a user identifier (ID), and a display mode (for example, color, shape) of annotations may vary for each identified user. As a result, who has added which annotation can be easily determined.

Further, for example, in a usage scenario at a construction site, a display mode of annotations may vary depending on the progress of construction. In such a case, when details of an annotation relate to an instruction for a construction task, the display mode of the annotation changes depending on the progress of the construction task. For example, the color of the annotation may be gray when the instructed construction task is completed, red when the instructed construction task is pending, and blue when the instructed construction task is in progress. By so doing, the progress management is facilitated. Further, for an annotation that indicates a pending task or for an annotation that is newly added, a badge may be superimposed on an icon representing the annotation and displayed so as to indicate that the associated task is pending or that the annotation is new. The badge may be displayed as a red dot in a partial area of the icon such as a red dot in the upper right area of the icon, or may be displayed as a symbol such as an exclamation mark "!" to attract the attention of the user.

Further, detailed information of a selected annotation may be displayed as a pop-up in the background area. The detailed information includes text describing details of an annotation, account information of a user (for example, user ID, user name), the date and time of addition of an annotation, the date and time of update, and the date and time of handling. Displaying an annotation in a background area in a pop-up manner allows users to check the details of the annotation without interfering with viewing an image in cube map format.

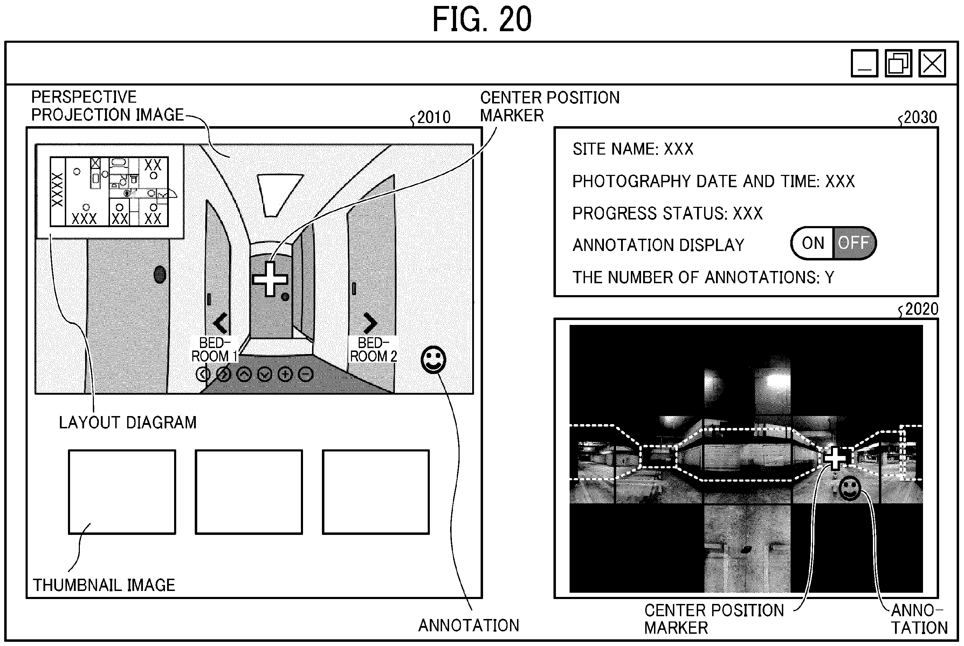

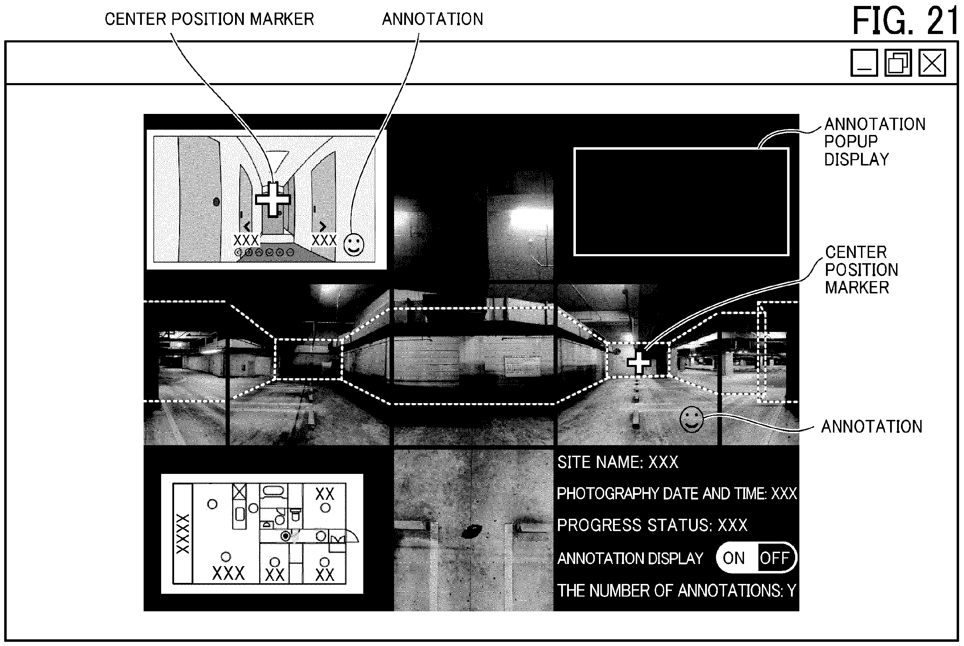

In the present embodiment, a spherical image may be displayed on a user interface (UI) as illustrated in FIG. 20 or 21. FIGS. 20 and 21 are diagrams each illustrating a UI displaying a spherical image in cube map format according to the present embodiment.

For example, as illustrated in FIG. 20, both of an image in perspective projection format and an image in cube map format may be displayed on the monitor 270. The monitor 270 displays, for example, a screen including a first display area 2010, a second display area 2020, and a third display area 2030. In FIGS. 20 and 21, the subject appearing in the image in perspective projection format and the subject appearing in the image in cube map format seem different. However, the images are based on the same image in equirectangular format, and the subjects are the same.

The first display area 2010 displays a spherical image in perspective projection format or a 360-degree image in perspective projection format (also referred to as an "image displayed in the first display area 2010"). According to an image capturing range of the image, an area to be displayed in a display area can be changed by operation for moving the image vertically or horizontally with the input device 280, or the image can be enlarged/reduced. Further, a layout diagram (a floor plan or a design drawing) illustrating rooms or floors may be displayed at the same time, and whether to display the layout diagram may be selected.

The second display area 2020 displays a spherical image in cube map format or a 360-degree image in cube map format (also referred to as an "image displayed in the second display area 2020").

The third display area 2030 displays various kinds of information. The various kinds of information indicate, for example, a site name of a construction site, the date and time of image capturing, and the progress of construction. The third display area 2030 may also include a switching button for switching between ON and OFF for annotation display. When the annotation display is set to ON, an annotation is displayed in each of the first display area 2010 and the second display area 2020. The third display area 2030 may also include information indicating the number of annotations that are added to the image currently viewed.

In the present embodiment, a shape (center position marker) indicating the center position of the image currently displayed is displayed in a superimposed manner on the image displayed in the first display area 2010. The shape is, for example, a cross marker. The relative position relationship of the cross marker to the first display area 2010 is fixed. Further, a shape is also superimposed on the image displayed in the second display area 2020 at a position corresponding to the center position of the image displayed in the first display area 2010. The shape is also, for example, a cross marker. The relative position relationship of the cross marker to the second display area 2020 is fluid, and the cross marker on the second display area 2020 can be implemented by associating the coordinates between the display formats as described above. For example, when the image displayed in the first display area 2010 is operated to change the display range of the image to be displayed, the center position in the image displayed in the first display area 2010 is changed. At this time, the cross marker displayed in the first display area 2010 indicates the center position on the image of which the display range has been changed. In this case, the cross marker displayed in the second display area 2020 is displayed at a position in the image in cube map format corresponding to the coordinates of the center position on the image of which the display range has been changed in the first display area 2010. Each of the spherical image and the 360-degree image has a large area that can be displayed and is convenient in that a user can freely change an area of the image to be displayed. However, due to the high degree of display flexibility as described above, the user may be confused about which area in the image is currently displayed. In such a case, the cross marker being displayed on the image in cube map format allows the user to easily recognize which area in the image is currently displayed.

Further, by directly operating the cross marker displayed in the image in cube map format with the input device 280, the image displayed in the first display area 2010 may be changed in response to the cross marker being directly operated in the second display area 2020. This allows the user to operate with respect to the cross marker on the image in cube map format to cause the cross marker to move toward an icon representing an annotation (so as to approach the icon) by checking where the icon is on the image, and the image in the perspective projection format in the first display area 2010 is displayed in response to the cross marker being operated, accordingly. This achieves smooth annotation display on the image displayed in the first display area 2010.

Further, when the layout diagram is displayed simultaneously with the image displayed in the first display area 2010, the image displayed in the first display area 2010, the layout diagram, and the image displayed in the second display area 2020 are displayed simultaneously on the monitor 270. The layout diagram may include a shape (for example, a circle) indicating an image capturing position and a shape (for example, a fan shape) indicating a display range of the image displayed in the first display area 2010. When multiple images are captured at multiple image capturing positions, a shape (for example, an arrow shape) indicating an additional image capturing position that is adjacent to the image capturing position at which the image currently displayed is captured may be displayed in the image displayed in the first display area 2010. The present disclosure is not limited to displaying such a shape indicating the additional image capturing position, but a shape (for example, an arrow shape) indicating the position of an annotation may be displayed. In this case, in response to a user operation of selecting such an arrow shape, the monitor 270 displays the image in a manner that the center position of the image displayed in the first display area 2010 corresponds to the position at which the annotation is added.

As illustrated in FIG. 20, the layout diagram and the spherical image in perspective projection format captured at an image capturing position indicated in the layout diagram are displayed in the first display area 2010 in a superimposed manner. The layout diagram includes multiple image capturing positions, and the image capturing position of the image currently displayed is displayed in a manner different from the other image capturing positions. Further, the layout diagram includes a shape resembling a fan shape indicating the direction and range of the image currently displayed with respect to the image capturing position.

The spherical image in the first display area 2010 includes a symbol indicating the direction of an adjacent image capturing position and displaying an image captured at the adjacent image capturing position, and buttons for displaying an upper area, a lower area, a left area, and a right area of the spherical image and enlarging and reducing the area.

As described above, the first display area 2010 includes the layout diagram, the symbols, and the various buttons, and thus the viewer such as an individual tenant can feel as if he or she is physically present in the place and is looking at the room while moving in the room.

There is a case where a construction site is a large-scale site. In such a case, positions in the site can be grasped by a layout diagram, the entire image of, for example, a displayed spherical image or a 360-degree image can be grasped with the image displayed in the second display area 2020, and the details of the image can be checked by designating an area or direction desired to be viewed as the image displayed in the first display area 2010. This allows a user who checks the monitor 270 to, for example, easily check the positions in the site, view the image, check the presence of annotation, check the position of an annotation, and check the details of the annotation.

Further, as illustrated in FIG. 21, an image in cube map format may be displayed in a display area, and a spherical image in perspective projection format or a 360-degree image in perspective projection format that corresponds to the first display area 2010 in FIG. 20 and various kinds of information that correspond to the third display area 2030 in FIG. 20 may be displayed in the background area of the image in cube map format. The layout diagram may be displayed in the background area without being superimposed on the spherical image or the 360-degree image in perspective projection format. A pop-up that is detailed information of an annotation, may also be displayed in the background area.

According to the above-described embodiments of the present disclosure, an information processing apparatus, an information processing system, a method, and a program can enhance the visibility of an image in cube map format.

Each of the functions of the embodiments of the present disclosure can be implemented by a device-executable program written in, for example, C, C++, C#, and JAVA. The program according to an embodiment of the present disclosure can be stored in a device-readable recording medium to be distributed. Examples of the recording medium include a hard disk drive, a CD-ROM, a magneto-optical disk (MO), a digital versatile disk (DVD), a flexible disk, an electrically erasable programmable read-only memory (EEPROM), and an erasable programmable read-only memory (EPROM). The program can be transmitted over a network in a form executable with another computer.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

## Claims

1. An information processing apparatus (120), comprising:
a correction unit (210, 630) configured to perform correction on a wide-angle image to correct the wide-angle image, the correction involving rotation around a vertical direction as a rotation axis; and
a conversion unit (210, 630) configured to convert the wide-angle image into a cube map format.

2. The information processing apparatus (120) of claim 1, further comprising
a display unit (210, 640) configured to display the wide-angle image that has been corrected and converted into the cube map format.

3. The information processing apparatus (120) of claim 2, wherein
the display unit (210, 640) is further configured to:
divide a back image of the wide-angle image converted into the cube map format into a right-back image and a left-back image; and
display the right back image on right of a right image of the wide-angle image converted into the cube map format, and the left back image on left of a left image of the wide-angle image converted into the cube map format.

4. The information processing apparatus (120) of any one of claims 1 to 3, further comprising
a calculation unit (210, 620) configured to calculate a parameter for the correction.

5. The information processing apparatus (120) of claim 1, wherein
the correction unit (210, 620, 630) is further configured to perform additional correction, the additional correction correcting a tilt to the vertical direction in the wide-angle image.

6. The information processing apparatus (120) of claim 4, wherein
the calculation unit (210, 620) is configured to calculate the parameter based on an image obtained by reducing a size of the wide-angle image.

7. The information processing apparatus (120) of claim 4, wherein
the calculation unit (210, 620) is configured to calculate the parameter with which a specific subject of the wide-angle image is to be placed in a front image of the wide-angle image converted into the cube map format.

8. The information processing apparatus (120) of claim 1, wherein
the correction unit (210, 630) performs the correction, in a case that the wide-angle image is an image captured indoors.

9. The information processing apparatus (120) of claim 5, wherein
the conversion unit (210, 630) is configured to convert the wide-angle image into the cube map format based on the wide-angle image on which the correction and the additional correction have been performed by the correction unit (210, 630).

10. The information processing apparatus (120) of claim 1, wherein
the conversion unit (210, 630) is further configured to convert an annotation added to the wide-angle image into coordinates on the wide-angle image converted into the cube map format.

11. The information processing apparatus (120) of claim 10, wherein
the display unit (210, 640) is further configured to position the annotation such that an area including the wide-angle image in the cube map format and the annotation is displayed within a display area of the display unit (210, 640).

12. The information processing apparatus (120) of claim 2, wherein
the display unit (210, 640) is configured to display the wide-angle image in a perspective projection format and the wide-angle image converted into the cube map format.

13. An information processing system (100) comprising:
the information processing apparatus (120) of claim 1; and
an image capturing device (110) configured to capture the wide-angle image.

14. An information processing method, comprising:
performing (S3003) correction involving rotation of a wide-angle image around a vertical direction as a rotation axis; and
converting (S1004, S3004) the wide-angle image into a cube map format.

15. A carrier means carrying computer readable codes for controlling a computer to carry out the method according to claim 14.
